# EUROPEAN PATENT APPLICATION

(11) **EP 2 071 807 A1**
(43) Date of publication of application: **17.06.2009**
(21) Application number: 07024002.3
(22) Date of filing: 11.12.2007
(51) Int. Cl.: H04L 29/06, H04L 29/08

(54) **Advanced Mobile IP system employing distributed home agents**

(71) Applicant: Nokia Siemens Networks Oy, 02610 Espoo (FI)
(72) Inventor: Franck-Uwe ANDERSEN, 10625 Berlin (DE); Matthias Fischer, 36419 Spahl (DE); Andreas Köpsel, 14199 Berlin (DE); Morten Schläger, 14059 Berlin (DE)
(74) Representative: Schober, Ralf Stefan

(57) **Abstract**

The mobile IP system (100) of the invention comprises a plurality of mobile agents (110) distributed along the edges of a data network (130). The mobile agents (110) provide efficient mobility management and data routing among user equipments (305, 355) connected to the present system. Data packets are tunnelled directly through the corresponding mobile agents (110) to which user equipments (305, 355) are attached, without the need for central home agents as required by conventional systems. The present system (100) further features a distributed home agent table (115) which includes a database comprising a plurality of lists of data (120) for the respective mobile agents (110) such that each mobile agent (110) is assigned a portion of the home agent table (115).Said table comprises user equipment profiles (220) and binding information (210). As such, the present mobile IP system (100) provides an innovative solution to some of the conventional limitations such as poor scalability and potential traffic bottleneck at home agents. Other benefits of the present system include improved load balancing, near-optimal routing paths and improved network resilience.

## Description

The present application relates to a mobile Internet Protocol system for providing mobile devices with advanced mobility management and efficient data communication. In particular, the present system adopts an innovative distributed topology, which significantly boosts mobile network scalability, efficiency, and resilience over conventional designs.

Internet Protocol (IP) addressing and routing techniques have enabled effective communication of data packets among public, shared, and private networks of fixed computing equipments. Internet Protocol version 4 (IPv4) and version 6 (IPv6) have become the dominant protocols for IP networks.

When an user equipment moves from one node to another, or from one network to another, its IP address is re-configured or re-assigned through router discovery or dynamic host configuration protocol (DHCP). Applications running on the user equipment make new connections using the newly assigned address. The previously connected links cannot be maintained and are ungracefully terminated. Using mobile IP, nodes may change their point-of-attachment to networks without changing their IP address. This allows them to maintain transport and higher-layer connections while moving.

Mobile IP employs a home agent (HA) to work as a stationary proxy for a mobile node (MN) to which a mobile user equipment is connected. Whenever the mobile node is away from its home network, the home agent intercepts packets destined to the node, and forwards the packets by tunnelling them to the node's care-of-address (CoA) with a new IP header, thus preserving the original IP header. The packets are subsequently decapsulated at the end of the tunnel to remove the added IP header before they are delivered to the mobile node. Transport layer protocols and applications are unaware of the IP header encapsulation process. The association of a home address with a care-of address for a mobile node is referred to as binding.

Mobile IP may include route optimization (RO) for allowing the packets to traverse a shorter route than the default one through the home agent. When route optimization is used, the mobile node sends its current care-of-address to the correspondent node (CN) using binding update (BU) messages. The packets leaving the correspondent node are source routed to the care-of-address. Whilst eliminating the transmission delays associated with tunnelling, route optimization requires user equipments to support RO-related applications and it introduces several security vulnerabilities. Furthermore, the latency caused by end-to-end binding updates can be excessive because, for every movement, the mobile node has to notify both the CN and the HA. When the latency is significant, said notification process becomes lengthy which may result in loss of data packets.

Hierarchical Mobile IP (HMIP) builds on standard Mobile IP (MIP) to separate local from global mobility. A description of HMIP is shown in Soliman et.al, "Hierarchical Mobile IPv6 Mobility Management", RFC 4140, August 2005. In HMIP, global mobility is managed by the MIP protocols, while local handoffs are managed locally. Mobility Anchor Points (MAPs) are used in HMIP to aid in mobile handoffs. The MAPs localize the signalling traffic and reduce the handoff latency because a local MAP can be updated more quickly than a remote home agent. A MN obtains a CoA from an access router and registers them with the local MAP, which assigns its own address as Regional-Care-of-Address (RCoA) to the MN. The MN registers its current location containing the RCoA with the HA via binding update. As a result, a CN is able to send packets directly to the MAP's RCoA.

Fast Mobile IP (FMIP) is designed to reduce packet loss associated with lengthy update runtime during hand-offs. When moving between two access routers in a FMIP network, a MN is transiently connected to both of the access routers. A description of FMIP is shown in R. Koodli, Fast Handovers for Mobile IPv6, RFC 4068, July 1005.

FMIP, HMIP, and a movement detection algorithm have been combined to form Seamless Handoff Architecture for Mobile IP (SMIP) for reducing end-to-end signalling overhead and packet loss. A description of SMIP is shown in Hsieh et. al. S-MIP: A Seamless Handoff Architecture for Mobile IP, 2003.

Mobile IP and its variants the FMIP, the HMIP and the SMIP all assign static addresses for their attached mobile nodes. When the MNs go offline, their corresponding addresses are not usable by other active mobile nodes. Furthermore, the anchor points are determined irrespective of the location of the MN or the actual load of the home agent.

Proxy Mobile IP (PMIP) provides network-based mobility. A description of PMIP is shown in Gundavelli, Proxy Mobile IPv6, 2007. This protocol provides mobility support to any MIP host within a restricted and topologically localized portion of the network, and without requiring the host to participate in any mobility related signalling. The PMIP is typically used for localized mobility management and the MIP is applied for global mobility management. The MAP connecting to each access router acts as the intermediary for the mobile node. For inter-domain movements, the mobile node sends to the MIP binding update with the new CoA in the new domain.

There has been a proposal (IEFT Draft "draft-farinacci-lisp-03.txt" by CISCO) for using End-point Identifiers (EIDs) and Routing Locators (RLOCs) for packet routing across a transit domain. This method calls for the mapping of node ID-locator address and EID-to-RLOC.

The present proxy mobile IP system employs an innovative distributed hash table (DHT) system for accomplishing efficient IP lookup, binding update and data routing. The use of distributed mobile agents and DHT-based home-agent table in the present mobile IP system provides superior levels of scalability and data routing efficiency.

In summary, the mobility management of conventional mobile IP systems relies upon the central home agent approach for data packet forwarding. Specifically, said data forwarding requires tunnelling through the home agent, thereby leading to longer paths. End-to-end binding updates to HA and/or CN are required when a user equipment moves to a new node, which may lead to an excessive latency and loss of data packets during the runtime of binding updates.

The present application provides a proxy mobile IP system comprising of a plurality of mobile agents distributed along the edges of a data network. Each of said mobile agents provides the combined functionalities of a home agent used in conventional mobile IP systems and the capabilities of a proxy MIP. Specifically, each of the mobile agents undertakes registration, authentication, profile lookup, and update of user equipments, as well as IP assignment and data forwarding. Data packets are tunnelled directly through the corresponding mobile agents to which a correspondent and mobile nodes are attached.

The distributed mobile agents provide efficient mobility management and data routing among user equipments connected to the present system. In contrast to conventional systems, the present mobile IP system builds neither on a single central home agent nor on multiple home agents that work in an isolated or non-collaborative fashion in which they are unaware of one another in terms of operation and management. As such, the mobile IP system removes the usual limitations, such as scalability and potential traffic bottleneck, associated with said single or multiple, but isolated home agents. The mobile IP system significantly improves over existing mobile IP technologies and infrastructures to deliver scalable and efficient mobility management and data transmission with enhanced network resilience, which is addressed by the inherent properties of the DHT itself. Other advantages of this application are apparent with reference to the detailed description provided herewith.

In accordance with another aspect of the present application, the mobile agents are administered through a home agent table comprising binding information and user equipment profiles. Authentication and authorization are fully supported between mobile agents and user equipments.

In accordance with yet another aspect of the present application, a method of configuring a mobile IP system with distributed mobile agents for achieving high levels of network efficiency, scalability, and resilience is disclosed.

A mobile IP communications system comprises a plurality of inter-coupled mobile agents being disposed at or near the edges of a data communication network for mobility management and data transmission among user equipments which may establish connections with different individual mobile agents when said user equipments move or roam in said data network; wherein data originated from a first user equipment and destined to a second user equipment can be exchanged or forwarded directly via the corresponding mobile agents said first and second user equipments are respectively attached to, without the need for a central home agent (HA) equipment or a plurality of administratively and operationally isolated and independent home agents. The mobile agents may be administered through a home agent table distributed over all the mobile agents for providing binding of the IP home address of each user equipment with the address of the corresponding mobile agent said user equipment is attached to. Said home agent table includes a database comprising a plurality of lists of data such that each mobile agent is assigned a portion of the home agent table.

A method for configuring a mobile IP communications system comprising the step of distributing a plurality of inter-coupled mobile agents at or near the edges of a data communication network for mobility management and data transmission among user equipments which may establish connections with different individual mobile agents when said user equipments move or roam in said data network; wherein data originated from a first user equipment and destined to a second user equipment can be exchanged or forwarded directly via the corresponding mobile agents said first and second user equipments are respectively attached to, without the need for a central home agent (HA) equipment or a plurality of administratively and operationally isolated and independent home agents. The mobile agents may be administered through a home agent table distributed over all the mobile agents for providing binding of the IP home address of each user equipment with the address of the corresponding mobile agent said user equipment is attached to. Said home agent table includes a database comprising a plurality of lists of data such that each mobile agent is assigned a portion of the home agent table.

In both the aforesaid mobile IP communications system and method for configuring the mobile IP communications system, the home agents are inter-coupled or inter-connected with one another by electrical, optical, wireless or electromagnetic links or any appropriate means which provide sufficiently high quality of communications. The user equipments may engage mobile agents in their proximity for connection establishment. The exchange and forwarding of data may be accomplished through IP data tunnelling techniques. The mobile agents are disposed on all possible data paths for maintaining high levels of network efficiency and optimal mobility management. Said mobile agents may be in communication with or integrated into the corresponding ingress and egress routers of said data network, with the routers comprising cellular and wireless access routers of common standards such as GPRS, 3G, WIMAX and 802.11-compliant WLANs. Furthermore, a portion of said mobile agents may be mobile proxies (MP) which are in communication with the gateways or similar equipment of external networks.

The home agent table could be further used, such as in the case when a standalone AAA server is not available, to store user equipment profiles each of which comprising an identifier, an assigned home address and other associated data of each said user equipment, such as current network or processing load, in order to perform load balancing between a plurality of nodes. Said identifier includes but is not limited to the media access control (MAC) address or the network access identifier (NAI) of the user equipment. Furthermore, the home agent table may have the format of a distributed hash table (DHT) for providing efficient key-based lookup functionality. Said distributed hash table (DHT) is based on any suitable DHT algorithm comprising of but not limited to Chord, Pastry and Kademlia systems. The IP home addresses remain valid and unchanged as long as the corresponding user equipments are actively connected to said data network.

An authentication and authorization process may be initiated if a user-equipment attempts to connect to a mobile agent when said user equipment roams and connects to a new mobile agent or during the initialization of said mobile agent and / or user equipment. Said authentication and authorization process may be executed through the extensible authentication protocol (EAP) or any other suitable algorithms. Upon successful authentication, the mobile agent sends router advertisements to said user equipment, which subsequently sends a request, using dynamic host configuration protocol (DHCP/DHCPv6) or any suitable algorithm, back to said mobile agent for IP address assignment. Any change in the binding information associated with any mobile agents in said data network is updated accordingly. Upon successful authentication and prior to the reception of said DHCP request and sending the reply containing the HoA, the mobile agent looks up the IP address of the user equipment in the home agent table if the user equipment home address does not exist in the user equipment profile. If said home address is present in the user equipment profile, then the location of the user equipment in the home agent table is updated.

The IP address assignment may be accomplished by searching said home agent table for the profile of said user equipment to obtain the assigned home address, when said user equipment roams in said data network. Furthermore, said IP address assignment may be accomplished by randomly or systematically selecting an available address with no linked or attached mobile agent address from the IP pool stored in said home agent table, when said user equipment and / or mobile agent are activated or during system or device boot-up.

Each of the local data lists of the home agent table comprises a static component and a dynamic component wherein the static component comprising binding data fields and the UE profile data fields for which the local MA is responsible in the overlay, and said dynamic component storing all the replied binding entries received in the DHT lookups.
The dynamic component effectively stores routing information comprising the optimum routes for transporting data packets between any two mobile nodes or mobile agents in the IP network. A requesting MA subscribes to the destined MA's publication when said requesting MA sends a lookup message and the lookup process has located the matching binding information in the static component of said destined MA. Upon said subscription, the entry in the dynamic component of the requesting MA is informed by a Binding Update whenever there is any change in the static entry of the destined MA. When a lookup execution traverses a MA that has the binding information of the destined MA in its dynamic component, a lookup reply is generated and the lookup process is terminated upon sending back the reply. The requesting MA undertakes the subscription by registering with said traversed MA. Moreover, whenever the traversed MA receives a Binding Update in regard with the corresponding dynamic entry, said Binding Update is forwarded to the affected MAs provided that the affected MAs have registered with or subscribed to said traversed MA.
Embodiments according to the present application will now be described with reference to the following figures, in which like reference numerals denote like elements.
- FIG. 1: illustrates a mobile IP system with a home agent table distributed over a plurality of mobile agents,
- FIG. 2: illustrates exemplary binding data field and user equipment profile stored in the home agent table of FIG. 1,
- FIG. 3: illustrates the processes involved in data transfer between two user equipments in the mobile IP system of FIG. 1,
- FIG. 4: illustrates the steps involved in connection establishment between a user equipment and a mobile agent of a first alternative embodiment of the mobile IP system of FIG. 1, and
- FIG. 5: illustrates an operational flow of the mobile agents according to the embodiment of FIG. 4.

The application may be understood more readily by reference to the following detailed description of certain embodiments of the application.

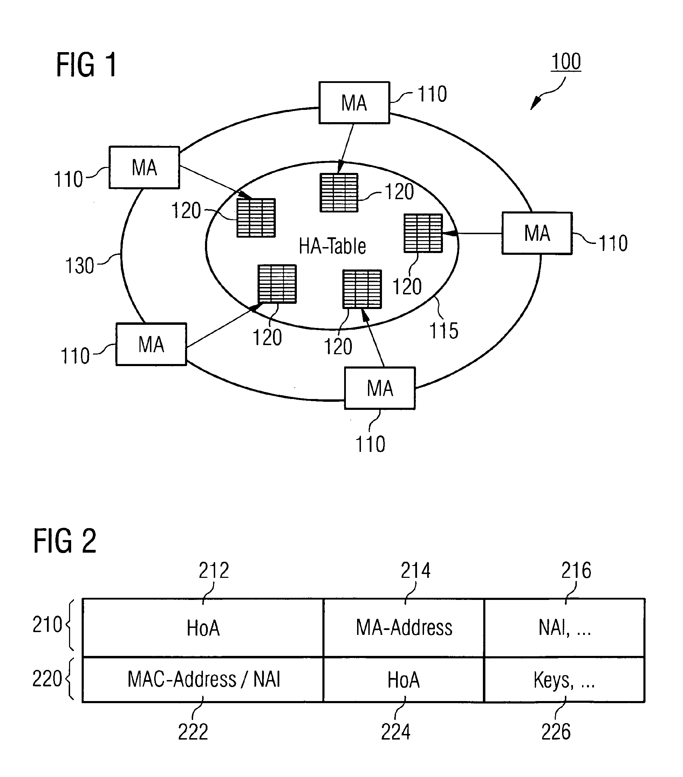

FIG. 1 shows a network architecture of a mobile IP system 100. The mobile IP system 100 comprises a plurality of mobile agents (MAs) 110 disposed and distributed along the edges of an IP (Internet protocol) network 130. The mobile agents (MAs) 110 are present on all possible data paths.

Said network edges are areas where network access points are present for allowing IP data traffic to enter or exit the IP network 130.

All the mobile agents (MAs) 110 are administered via a distributed home agent overlay table (HA-table) 115 in the form of a DHT (distributed hash table). The HA-table 115 includes a database comprising a plurality of lists of data 120 for the respective mobile agents 110. Each of said data lists 120 further comprises information and IP addresses of some user equipments (UEs) and of the respective MAs 110 to which the UEs are connected.

User equipments (UEs) such as laptop computers, mobile phones, personal digital assistants, or other embedded devices (not shown in FIG. 1) are connected to the IP network 130 via the corresponding mobile agents (MAs) 110 which are in the respective proximity of said user equipments.

Said user equipments may comprise a correspondent node (CN) and at least one mobile node (MN). The mobile node is typically a mobile or a wireless device which may move from one MA 110 to another MA in said IP network 130. The correspondent node (CN) is either a stationary or a mobile computing / communications device.

The mobile IP system 100 is effectively a peer-to-peer network in which a plurality of co-operative nodes or mobile agents 110 is consistently managed via a distributed hash table 115. These nodes or mobile agents 110 provide virtual and consistent mobility services to the mobile nodes.

The mobile agents (MAs) 110 undertake registration, authentication, profile lookup, and update of user equipments, as well IP assignment and data forwarding. The MAs 110 include functionality provided in PMIP, HMIP and a home agent.

The PMIP is described in Gundavelli, Proxy Mobile IPv6, 2007. The HMIP is shown in Soliman et.al. Hierarchical Mobile IPv6 Mobility Management, RFC 4140, August 2005. The HA is shown in Sangjin Jeong, "Network-based IP Mobility Support: Proxy MIPv6" (ETRI / PEC) 2007.

Tunnelling techniques are used for data forwarding between the overlay nodes. IP tunnels can be established between any two MAs 110 for data transmission.

The mobile agents (MAs) 110 in the mobile IP system 100 perform the combined tasks of a home agent and a mobile anchor point (MAP). A description of the home agent and the mobile anchor point is shown in
Soliman et.al, "Hierarchical Mobile IPv6 Mobility Management", RFC 4140, August 1005, http://www.ietf.org/rfc/rfc4140.txt; and
Gundavelli et.al, "Proxy Mobile IPv6", 1007,
http://tools.ietf.org/html/draft-ietf-netlmm-proxymip6-05

The mobile IP system 100 comprises a plurality of mobile agents (MAs) 110 sharing a plurality of MNs in the HA table 115.

Data packets sent by a CN or UE are intercepted by a MA 110 in the vicinity of the CN or the UE. Said MA 110 filters all intercepted data packets in accordance with pre-determined sub-network mask or any other suitable means. The intercepting MA, which has intercepted the data packets sent from a CN, interrupts standard routing and performs a lookup in the DHT (distributed hash table) based HA-table 115 for the address of a destined MA to which the destined UE is attached to, using the IP address of the destined UE in the first IP packet as the lookup key. Next, the intercepting MA establishes an IP tunnel with the destined MA and forwards all corresponding data packets to said destined MA.

The mobile agents (MAs) 110 are configured to be in communication with or integrated into network ingress and egress routers (not shown in the FIG. 1), such as cellular or wireless access routers of common wireless communications standards including GPRS (General Packet Radio Service), 3G (Third Generation), WIMAX (Worldwide Interoperability for Microwave Access), or 802.11-complaint WLANs (Wireless Local Area Network).

The HA-table 115 stores data records of user equipment (UE) profiles and binding information between the UEs and their corresponding MAs 110. HA-table 115 is preferably in the form of a distributed hash table (DHT) for providing efficient key-based lookup functionality with high-level of scalability.

The HA-Table 115 is distributed across the plurality of MAs 110 and each of the MAs 110 is assigned a portion (local data list 120) of the HA-table 115. Besides, the DHT lookup functionality allows individual MA 100 to access the other parts (remaining data lists) of the HA-table 115, which are not stored locally. In other words, each of the mobile agents 110 stores and manages only a portion of the overall HA-table 115, which is in accordance with the principle used in "distributed hash table" algorithms and technology.

The location of a UE is indicated by the address of the MA 110 to which the UE is attached. The UEs are assigned a pre-determined range of IP addresses.

The presence of the mobile agents (MAs) 110 on all possible data paths maintains sufficiently high efficiency in mobility management and data forwarding.

In a special embodiment, a mobile proxy (MP) is used for interfacing the mobile IP network 100 with an external network such as the Internet. Said mobile proxy (MP) is a type of mobile agents (MAs) 110 designed primarily to execute lookups and data transmission without providing router advertisement and IP assignment functionality. In other words, MPs do not need to support mobility.

To perform data forwarding, a MP intercepts data packets sent from a UE and performs lookups in the HA-table 115 for the corresponding MA address of the destined UE. The MP further tunnels said data packets to the destined MA and UE.

The mobile proxy (MP) can be configured to be in communication with or be integrated into routers or gateways to external networks.

The SAE (System Architecture Evolution) of mobile communications relies on the use of PMIP (proxy mobile IP). The mobile IP system 100 is fully compatible with SAE as the distributed MAs 110 used in the mobile IP system 100 can be implemented in the mobile anchor points (MAPs) of PMIP. Furthermore, distributed MAs 110 can be implemented on all respective home agents on the Packet Data Network (PDN) Gateways. A description of PMIP is shown in Gundavelli, Proxy Mobile IPv6, 2007.

The mobile IP system 100 provides an innovative distributed topology, which provides scalable and efficient network-based mobility management for mobile devices across heterogeneous access technologies.

Conventional mobile IP systems employ central home agents as stationery or static proxies for mobile nodes. In contrast, The mobile IP system 100 accomplishes the tasks of mobility management and data routing of a conventional mobile IP system in a dynamic fashion. At any moment when a first user device in the mobile IP system 100 sends data to a second user device (correspondent node CN), a first mobile agent in the closest proximity of said first user device serves as a standard mobile IP-capable access router. Said first mobile agent further serves as a mobile IP home agent for the second user device. A second mobile agent to which the second user device is attached acts, at this instant, as a "mobility anchor point" (in HMIP terminology) for said second user equipment. When data is originated from the second user equipment and sent in the reverse direction towards the first user equipment, the second mobile agent serves as the mobile IP home agent for the first user device whereas the first mobile agent acts as the mobility anchor point for the first user equipment. As a result, the home agent functionalities provided by the mobile agents in the mobile IP system 100 at any instantaneous moment is similar to those provided by the static home agents used in conventional IP systems. In other words, for any two mobile nodes and their corresponding mobile agents, and for a given point in time, the mobile IP system 100 exhibits similar behaviour as the classic PMIP or MIP systems with centralized home agents. However, the present system as a whole should be distinguished from the conventional mobile IP systems, namely the system 100 comprises a plurality of mobile agents distributed along the network edge, and the mobile agents assigned to serve as the home agents of a particular user equipment are not fixed nor unique.

FIG. 2 illustrates the binding and UE profile records stored in HA-table 115 of FIG. 1.

In the mobile IP system 100, each of the UEs is assigned an unique IP address. The location of the UE is indicated by the address of the MA 110 to which the UE is attached. The IP addresses of the UE and its corresponding MA 110 are grouped together as binding information in the HA-table 115.

The HA-table 115 includes a binding data field 210 and a UE profile data field 220.

The binding data field 210 comprises the IP home address (HoA) 212 of a UE, the address 214 of the MA 110 to which the UE is connected, together with any supplementary information.

Such supplementary information may include but is not limited to a network access identifier (NAI) 216 of the UE.

The HoA 212 in the table is hashed and the resulting hashed value represents an identifier in the distributed hash table for supporting efficient key-based lookup functionality.

A description of NAI is shown in B. Aboba, M. Beadles, J. Arkko und P. Eronen, The Network Access Identifier, RFC 4282, 2005.

The UE profile data field 220 comprises a UE identifier 222, which could be the device's media access control (MAC) address or its network access identifier (NAI), or it may be in any form and format which provides unambiguous identification of the corresponding UE. The UE profile 220 further comprises an IP home address (HoA) 224 of the UE among other supplementary information 226, such as the value of a hash key 226.

Said home address 224 remains unchanged if said UE has previously been connected to the network 130 when, for instance, the UE moves and attaches to a new MA 110.

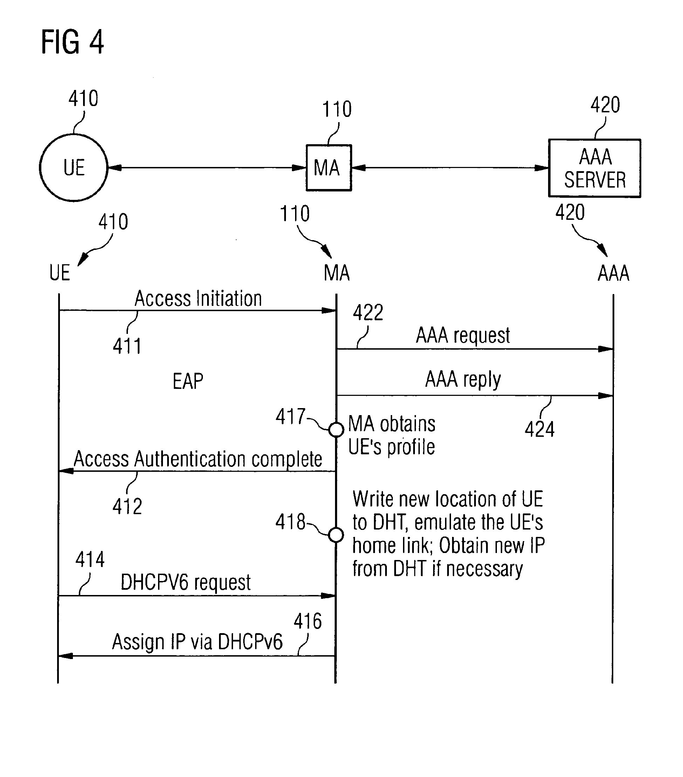

If the profile of a particular UE is not listed in HA-table 115, which typically indicates an initial connection request after a system activation or boot-up, the MA 110 would need to assign an IP address as the HoA and create the UE profile accordingly. This initialization process is further elaborated below in FIG. 4.

The first columns in said binding and UE profile data fields 210 & 220 may be hashed to yield keys for indexing and searching within the DHT table.

When a UE connects to a MA 110, the UE is recognized by its MAC address or NAI. The MA 110 then retrieves the UE profile 220 from the distributed HA-table 115. Said UE profile 220 includes UE's home address (HoA) 224 if the UE has been connected to another MA 110 before. The lookup returns no result in the case of an initial connection after system boot-up and the MA 110 needs to determine an IP for the UE, followed by creating a new profile for the UE containing a new home address 224.

Upon access authentication and profile lookup, the contacted MA 110 sends out router advertisements and with this, the UE recognizes the router to which the UE is connected to, and it requests an IP via DHCP6 (dynamic host configuration protocol version 6).

IP addresses can be assigned out of a local address pool of the MA 110, or the IP pool shared in the DHT or HA-table 115.

For IP address compilation, all the available home addresses 212 can be entered into the table with free IP addresses indicated by the absence of any corresponding MA address 214.

For IP address assignment, the MAs 110 may perform a lookup in the HA-table 115 for a random address, which may be assigned to a UE if the lookup process does not return a MA address 214.

For binding of a MA 110 to a UE, the MA 110 writes its own address 214 in the binding data field 210 in the DHT or HA-table 115, for indicating that the MA has served as the anchor point for the UE.

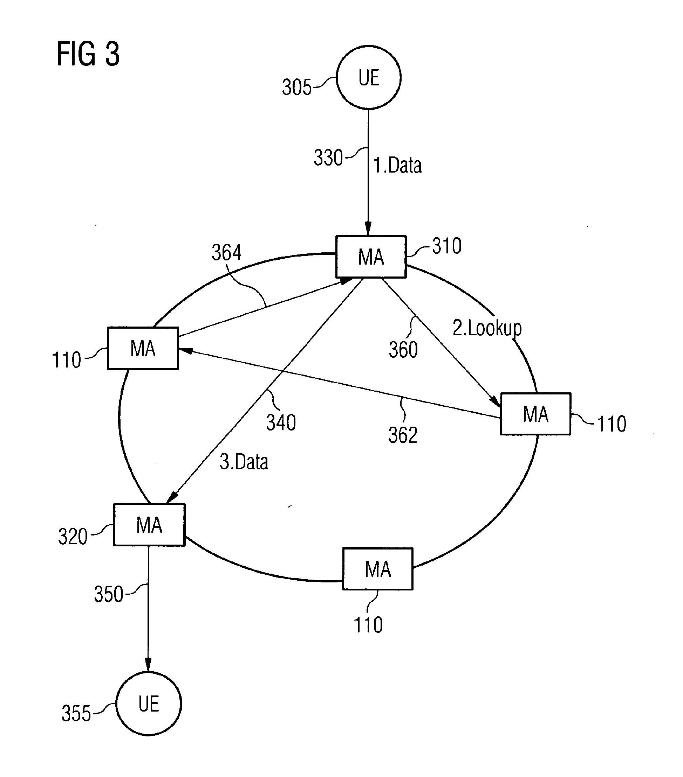

FIG. 3 illustrates the processes involved in data transfer between a first user equipments (UE) 305 and a second UE 355. The UEs 305 and 355 typically comprise a correspondent node (CN) and a mobile node (MN).

The data transfer commences with the first UE 305 obtaining an IP address of the second UE 355 by employing standard technique such as domain name system (DNS). Subsequently, data packets from the first UE 305 is intercepted by a first mobile agent 310 in the vicinity of the first UE 305 via a first data path 330. If the address of the second UE 355 is bound to the same first MA 310, the intercepted data is then relayed to the second UE 355. Otherwise, a lookup process is initiated to step through (360, 362 & 364) the data lists 120 corresponding to the various MAs 110 of HA-table 115 for locating the corresponding second MA 320 to which the second UE 355 is attached to. This is accomplished by looking for the binding data fields 210 in the different data lists 120 of HA-table 115 for the matching UE home address 212 and the corresponding MA address 214. Next, a second data path 340 is established to tunnel data packets between said first MA 310 and said second MA 320. Finally, the second MA 320 delivers the received data packets to the second UE 355 over a third data path 350.

In the tunnelling process, a temporary IP header is added to the original IP header of the second UE 150 within first MA 310 and subsequently be removed at the end of the tunnel.

The IP tunnel 340 is removed or deactivated after the data transfer. A timeout may occur and a route entry in the corresponding MA is deleted after tunnel 340 has been idling for a pre-determined duration of time.

FIG. 4 shows the initialization or boot-up process of a user equipment 410 requesting for authentication and IP address assignment from the mobile agent 110 of a first alternative embodiment of system 100, such as the third-generation SAE (System Architecture Evolution) cellular network, in which an authentication system or AAA server is available. The MA 110, which is in the vicinity of UE 410, is in communication with the AAA server 420, for the execution of UE authentication, authorization and profile management.

During access initialization in step 411, the UE 410 presents its identity to the MA 110. The identity could be the device's media access control (MAC) address (222), or its network access identifier (NAI) or it may be in any form and format which provides unambiguous identification of said UE. The MA 110 acts as an intermediary and anchor point for said UE 410.

The MA 110 then requests for the UE profile, authentication and authorization in step 422 from the AAA server 420. The AAA server 420 replies accordingly in step 424 and the MA 110 obtains the corresponding UE profile from the AAA server 420 in step 417. Next, mutual authentication between UE 410 and MA 110 is then executed using the extensible authentication protocol (EAP) or any other suitable algorithms.

Upon successful authentication, the MA 110 sends router advertisements to the UE 410 in step 412 with the stateful configuration flag set, which triggers the UE 410 to send a DHCPv6 (dynamic host configuration protocol) request 414 back to the MA 110 for IP address assignment in step 416.

In step 418, the present location of the UE 410 or the address of the MA 110 to which UE 410 is connected is updated in the HA-table 115. This emulates the home link of UE 410. Furthermore, new IP address is derived from the HA-table 115 if necessary. In order to speed up processing, step 418 may be executed prior to the formal DHCPv6 request 414 by UE 410 as the step 418 of getting a free IP from HA-table 115 may take considerable time

In this embodiment, it is not necessary for the system to store the UE authentication and profile information 220 in the HA-table 115 as the information 220 can be retrieved from the AAA server 420.

In step 416, the assigned IP address is typically selected, either randomly or systematically, from the available IP pool stored in the HA-table 115. An IP address is available if it is not attached or linked to an MA address in the HA-table. The MA 110 creates a new profile (220) for the UE 410 in the HA-table 115. The MA 110 further enters the binding information comprising UE home address (HoA), the address of the MA 110 and other supplementary information into the corresponding data field 210 in step 416. The MA 110 has effectively assigned itself as the anchor point for the UE 410. The assigned home address remains unchanged if the UE 410 roams in the network 130.

Similar to the above-described authentication and binding update process flow, as the UE 410 moves from a first MA to a second MA, the UE 410 presents its identity to said second MA, which then requests for the UE profile, authentication and authorization from AAA server 420. The AAA server 420 replies accordingly. Next, mutual access authentication is executed between said UE 410 and the second MA. The second MA further sends router advertisements to the UE 410. With this, the UE 410 reckons that there is a new default router at its home link and it sends a DHCPv6 request to said second MA, which assigns the IP out of the UE's profile. Said second MA further sends a binding update (BU) to said first MA, which sends the BUs to all associated MAs for switching the data path to the new destination. Said update is transparent to the UE 410, which continues to receive data packets directed to its home address.

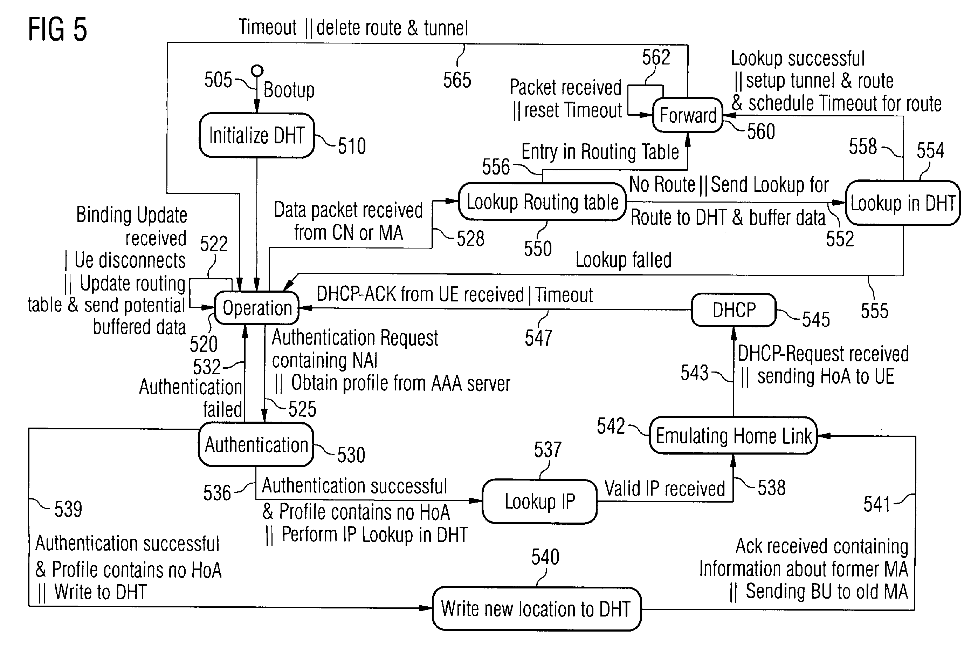

An operational flow of the mobile agent 110 in the embodiment according to FIG. 4 is depicted in FIG. 5. The steps involved during MA boot up, data tunnelling, UE authentication and IP assignment are illustrated in the diagram.

Upon system initialization or boot-up 505 of the MA 110, the HA-table (DHT) 115 is initialized and distributed over all MAs in step 510. The MA 110 is then ready to process requests for data forwarding, binding update and UE authentication in step 520.

During access initialization in both cases of connection establishment and UE movement, UE 410 presents its identity in the form of media access control (MAC) address or network access identifier (NAI) in step 525. Said identifier may be in any form and format which provides unambiguous identification of the said UE. The MA 110 further requests for the UE profile, authentication and authorization in step 525 from the AAA server 420. Next, mutual authentication between the UE 410 and the MA 110 is executed in step 530. If the authentication fails, the MA 110 stops further processing and the UE 410 is rejected, as shown in step 532. Upon successful authentication, the home link of UE 410 is emulated in step 542 by means of any of the following processes: Firstly, if the UE home address (HoA) is found in step 536 to be absent in the UE profile retrieved from the AAA server 420, then the MA 110 advances to perform IP lookup in the HA-table (DHT) 115 in steps 537 & 538. Secondly, if said HoA is found in step 539 to be present in the UE profile, then the binding data field 210 of the DHT is updated, in step 540, with the MA address which represents the new UE location in the network. Acknowledgement received for the successful binding update comprises information about the former MA to which UE 410 was previously attached. The binding data field corresponding to said former MA is then updated accordingly in step 541.

MA 110 subsequently sends out specific router advertisements with the stateful address configuration flag set in step 542. In response, UE 410 returns a DHCPv6 request in step 543.. The MA 110 then advances to process said DHCP request and sends the HoA to the user equipment in step 545. Upon the reception of a DHCP acknowledgement or the occurrence of a first pre-determined timeout in step 547, the MA 110 then returns to step 520 and becomes ready for the next task.

During the course of operation in step 520, any received binding update as a result of disconnection or movement of the UE 410 leads to a corresponding update of the routing table and the transmission of any data still buffered in the corresponding MA, as indicated in step 522.

During data transmission from a first UE to a second UE, data packets from the first UE is intercepted in step 528 by the MA 110 in the vicinity. The MA 110 advances to step 550 in which a lookup process is executed to retrieve any entry in said routing table. The presence of an entry in the routing table (556) sets the MA 110 ready for data packet forwarding in step 560. If there is no routing record in said routing table (552), MA 110 proceeds to look up the HA-table (DHT) 115 and to locate the corresponding MA to which the second UE is attached. This is accomplished by first looking through the local data list 120 in the HA-table 115 and checking the binding data fields 210 in the data lists 120 of HA-table 115 for the matching UE home address 212 and the corresponding MA address 214. If this process fails, a lookup in the DHT or remaining data lists of the HA-table 115 is performed and therewith other MAs 110 are queried for the matched entry. The MA 110 returns to step 520 if the lookup is unsuccessful (555). If said lookup is successful, the MA 110 advances to set up the corresponding tunnel and route for data routing and set a second time-out for routing in step 558. The second time-out process is reset whenever data packets are received by MA 110, as shown in step 562. Upon forwarding (560) all the corresponding data packets, the MA 110 demolishes the IP tunnel upon the expiry of a third pre-determined time-out period (565), and returns to step 520 for the next task of data forwarding, binding update or UE authentication

In a second alternative embodiment of the mobile IP system 100, a dynamic component is incorporated into the HA-Table 115. Said dynamic component removes the need for a separate routing table. More importantly, said dynamic component, as elaborated below, boosts the efficiency of the lookup process 537.

In the second alternative embodiment, the local portion 120 of the HA-table 115 comprises a static component and a dynamic component.

The static component comprises the aforesaid binding data fields 210 and the UE profile data fields 220, for which the local MA (110) is responsible in the overlay, of the mobile IP system 100. The binding data field 210 comprises the IP home address (HoA) 212 of a UE, the address 214 of the MA 110 to which the UE is connected, together with any supplementary information. Such supplementary information may include but is not limited to a network access identifier (NAI) 216 of the UE. The HoA 212 in the table is hashed and the resulting hashed value represents an identifier in the distributed hash table for supporting efficient key-based lookup functionality. The UE profile data field 220 comprises a UE identifier 222, which could be the device's media access control (MAC) address or its network access identifier (NAI), or it may be in any form and format which provides unambiguous identification of the corresponding UE. The UE profile 220 further comprises an IP home address (HoA) 224 of the UE among other supplementary information 226, such as the value of a hash key 226.

The functionalities of the binding data field and profile data field of said static component are identical to the corresponding fields 210, 220 used in the mobile IP system 100.

The dynamic component comprises a routing table which stores the records of the optimum paths or routes for transporting or tunnelling data packets between any pairs of mobile nodes or mobile agents 110 in the IP network 130.

The dynamic component replaces the routing table separately generated in mobile IP system 100. Specifically, the dynamic component stores all the replied binding entries received in the DHT lookups (537) (537). In other words, a separate routing table is not required in said second alternative embodiment as the associated routing information is stored in the dynamic component of the HA-table.

Furthermore, the second alternative embodiment employs a publish-subscribe asynchronous messaging topology.

In this publish-subscribe topology, a requesting MA 310 subscribes to the destined MA's (320) publication when said requesting MA sends a lookup message and the lookup process 537 has located the matching binding information 212, 214 in the static component of said destined MA 320. Upon said subscription, the entry in the dynamic component of the requesting MA 310 is informed by a Binding Update whenever there is any change in the static entry of the destined MA 320. As a result, the dynamic content in the HA-table is kept up to date. Dynamically created entries speed up the lookup process 537.

When a lookup execution traverses a MA that has the binding information of the destined MA 320 in its dynamic component, a lookup reply is generated and the lookup process 537 is terminated upon sending back the reply. The requesting MA 310 undertakes the subscription by registering with said traversed MA. Moreover, whenever the traversed MA receives a Binding Update in regard with the corresponding dynamic entry, said Binding Update is forwarded to the affected MAs provided that the affected MAs have registered with or subscribed to said traversed MA.

Although the dynamically created entries require an additional signalling, dynamically created entries speed up the lookup process 537. As a result, HA-table 115 having the above-said dynamic component provides the following advantages: Firstly, the number of data packets sent to an outdated destination can be significantly reduced, and secondly the number of hops needed to locate the destined MA can be reduced when a lookup execution traverses a MA that contains the required binding information in its dynamic component.
The novel distributed MA approach adopted in the mobile IP system 100 has significantly improved the mobility management, efficiency, and overall network resilience: First, the mobile IP system 100 replaces the powerful and typically expensive home agent element by a plurality of less powerful and lower-cost mobile agents and proxies. Considerable effort is required for conventional designs to deploy and configure additional home agent servers when the number of user equipments goes beyond the network capacity. In contrast, the mobile IP system 100 allows easy and convenient mobile agent replacement and expansion.

Moreover, the central home agent design in conventional systems may pose a performance bottleneck, which is prone to single point of failure. When a mobile agent fails in the mobile IP system 100, only a relatively small portion of the network paths and elements are affected as the HA-table 115 can readily be re-organized and the remaining mobile agents can stay operational.

In addition, the routing paths in the present distributed approach are highly utilized as the mobile agents 110 and proxies are deployed at the edges of the network 130. This same reason gives the system yet another benefit, namely the loads are inherently spread among the network edge elements to achieve excellent load balancing. Conventional designs bind the user equipment to the home agent, which may be far away from the user equipment in a foreign link. Route optimization can reduce the drawback of long distance between the user equipment and the home agent. This may introduce problems associated with security vulnerabilities and excessive latency.

### Abbreviations

- IP: Internet protocol
- IPv4: IP version 4
- IPv6: IP version 6
- DHCP: dynamic host configuration protocol
- HA: home agent
- MN: mobile node
- CoA: care-of-address
- RO: route optimization
- CN: correspondent node
- BU: binding update
- HMIP: hierarchical mobile IP
- MIP: standard mobile IP
- MAP: mobility anchor point
- RCoA: regional care-of-address
- FMIP: fast mobile IP
- SMIP: seamless handoff architecture for mobile IP
- PMIP: proxy mobile IP
- MA: mobile agent
- MP: mobile proxy
- UE: user equipment
- CN: correspondent node
- MN: mobile node
- HA-table: home agent table
- DHT: distributed hash table
- HoA: home address
- NAI: network access identifier
- MAC: media access control
- DNS: domain name system
- EAP: extensible authentication protocol
- SAE: System Architecture Evolution

### Reference numbers

- 100: mobile IP system
- 110: mobile agents (MAs)
- 115: home agent table (HA-table)
- 120: data lists
- 130: IP network
- 210: binding data field
- 212: UE home address in binding data field (210)
- 214: MA address
- 216: supplementary information
- 220: UE profile data field
- 222: UE identifier (MAC / NAI)
- 224: UE home address data field in UE profile (220)
- 226: supplementary information
- 305: first user equipment
- 355: second user equipment
- 310: first mobile agent
- 320: second mobile agent
- 330: first data path
- 340: second data path
- 350: third data path
- 360: first lookup path
- 362: second lookup path
- 364: third lookup path
- 410: user equipment in FIG. 4
- 411: access initialization step
- 412: step in which router advertisements are sent
- 414: step in which DHCP request is sent
- 416: step in which IP address is assigned
- 417: step in which UE profile is obtained
- 418: step in which executes IP assignment & binding update
- 420: AAA server
- 422: step in which UE profile, authentication & authorization are requested
- 424: step in which AAA server replies
- 505: system initialization of MA
- 510: DHT initialization
- 520: MA in active operation, waiting for service request
- 522: actions taken upon receiving binding update
- 525: authentication request
- 528: data packets received from CN
- 530: authentication
- 532: step taken if authentication fails
- 536: step taken upon successful authentication and UE profile does not contain the UE home address
- 537: IP lookup process
- 538: valid IP received
- 539: step taken upon successful authentication and UE profile contains the UE home address
- 540: update DHT
- 541: step taken upon receiving acknowledgement
- 542: home link emulation process
- 543: DHCP request
- 545: action taken in processing DHCP request
- 547: DHCP-ACK received
- 550: lookup routing table
- 552: step taken if route record is absent
- 554: lookup in DHT
- 555: step taken if lookup is unsuccessful
- 556: entry is present in routing table
- 558: step in which IP tunnel is set up
- 560: forward of data packets
- 562: reset second time-out
- 565: third time-out period

## Claims

1. A mobile IP communications system (100) comprising:
a plurality of inter-coupled mobile agents (MA; 110) being disposed at or near the edges of a data communication network (130) for mobility management and data transmission among user equipments (UE; 305, 355) which may establish connections with the mobile agents (110) when said user equipments (305, 355) roam in said data network (130);
wherein
data originated from a first user equipment (305) and destined to a second user equipment (355) can be exchanged or forwarded directly via the mobile agents (310, 320) to which said first and second user equipments (305, 355) are respectively attached, without the need for a central home agent (HA) equipment or a plurality of administratively and operationally isolated and independent home agents, and
the mobile agents (110) being administered through a home agent table (HA-table; 115) distributed among said mobile agents (110) for providing binding (210) of the IP home address (HoA; 212) of each user equipment (305, 355) with the address (214) of the mobile agent (110) to which said user equipment is attached, and wherein said home agent table (115) includes a database comprising a plurality of lists of data (120) such that each mobile agent (110) is assigned a portion of the home agent table (115).

2. The system (100) according to claim 1
**characterized in that**
said plurality of mobile agents (110) are inter-coupled or inter-connected with one another by electrical, optical, wireless or electromagnetic links or any appropriate means which provide sufficiently high quality of communications.

3. The system (100) according to claim 1
**characterized in that**
said user equipments (305, 355) engaging mobile agents (110) in their proximity for connection establishment.

4. The system (100) according to claim 1
**characterized in that**
said exchange and forwarding of data (560) being accomplished through IP data tunnelling (340) techniques.

5. The system (100) according to claim 1
**characterized in that**
said mobile agents (110) being disposed on all possible data paths for maintaining high levels of network efficiency and optimal mobility management.

6. The system (100) according to claim 1
**characterized in that**
said mobile agents (110) being in communication with or integrated into the corresponding ingress and egress routers of said data network (130).

7. The system (100) according to claim 6
**characterized in that**
said network routers comprising cellular and wireless access routers of common communication standards.

8. The system (100) according to claim 1
**characterized in that**
a portion of said mobile agents (110) being mobile proxies (MP) which are in communication with the gateways or similar equipment of external networks.

9. The system (100) according to claim 1
**characterized in that**
said home agent table (115) is used to store user equipment profiles (220) each of which comprising an identifier (222), an assigned home address (224) and other associated data of each said user equipment in order to perform load balancing between a plurality of nodes, and wherein said identifier (222) includes the media access control (MAC) address or the network access identifier (NAI) of the user equipment (305, 355).

10. The system (100) according to claim 1
**characterized in that**
said home agent table (115) having the format of a distributed hash table (DHT) for providing efficient key-based lookup functionality.

11. The system (100) according to claim 10
**characterized in that**
said distributed hash table (DHT) is based on any suitable DHT algorithm comprising of Chord, Pastry and Kademlia systems.

12. The system (100) according to claim 1
**characterized in that**
said IP home addresses (212; 224) remaining valid and unchanged as long as the corresponding user equipments (305, 355) are actively connected to said data network (130).

13. The system (100) according to claim 1
**characterized in that**
an authentication and authorization process (411, 525) being initiated if a user equipment (305, 355) attempts to connect to a mobile agent (110) when said user equipment roams and connects to a new mobile agent or during the initialization of said mobile agent and / or user equipment.

14. The system according to claim 13
**characterized in that**
said authentication and authorization process (411, 525) being executed through the extensible authentication protocol (EAP) or any other suitable algorithms.

15. The system according to claims 1 and 13
**characterized in that**
upon successful authentication (412, 536, 539), said mobile agent (110) sends router advertisements to said user equipment (305, 355) which subsequently sends a request (414, 543), using dynamic host configuration protocol (DHCP/DHCPv6) or any suitable algorithm, back to said mobile agent (110) for IP address assignment (416, 545), wherein any change in the binding information associated with any mobile agents (110) in said data network (130) is updated accordingly.

16. The system according to claim 15
**characterized in that**
upon successful authentication and prior to the reception of said DHCP request and sending the reply containing the HoA (543), the mobile agent (110) looks up the IP address of the user equipment (305, 355)in the home agent table (537) if the user equipment home address (212, 224) does not exist in the user equipment profile (220); and wherein if said home address (212, 224) is present in the user equipment profile (220), then the location of the user equipment (305, 355) in the home agent table (115) is updated (540).

17. The system according to claim 15
**characterized in that**
said IP address assignment (416, 545) being accomplished by searching said home agent table (115) for the profile (220) of said user equipment to obtain the assigned home address (224), when said user equipment (305, 355) roams in said data network 130).

18. The system according to claim 15
**characterized in that**
said IP address assignment (416, 545) being accomplished by randomly or systematically selecting an available address with no linked or attached mobile agent address from the IP pool stored in said home agent table (115), when said user equipment and / or mobile agent are activated or during system or device boot-up (411, 505).

19. The system according to claims 9, 10, 12 and 15
**characterized in that**
each of the local data lists of the home agent table comprising a static component and a dynamic component wherein the static component comprising the binding data fields (210) and the UE profile data fields (220) for which the local MA (110) is responsible in the overlay, and said dynamic component storing all the replied binding entries received in the DHT lookups (537); and wherein the dynamic component effectively stores routing information comprising the optimum routes for transporting data packets between any two mobile nodes or mobile agents (110) in the IP network (130).

20. The system according to claim 19
**characterized in that**
a requesting MA (310) subscribes to the destined MA's (320) publication when said requesting MA sends a lookup message and the lookup process (537) has located the matching binding information (212, 214) in the static component of said destined MA (320); and wherein upon said subscription, the entry in said dynamic component of the requesting MA (310) is informed by a Binding Update whenever there is any change in the static entry of the destined MA (320).

21. The system according to claims 19 and 20
**characterized in that**
when a lookup execution traverses a MA that has the binding information of the destined MA (320) in its dynamic component, a lookup reply is generated and the lookup process (537) is terminated upon sending back the reply; and
wherein the requesting MA (310) undertakes the subscription by registering with said traversed MA; and whenever the traversed MA receives a Binding Update in regard with the corresponding dynamic entry, said Binding Update is forwarded to the affected MAs provided that the affected MAs have registered with or subscribed to said traversed MA.

22. A method for configuring a mobile IP communications system (100) comprising the step of:
distributing a plurality of inter-coupled mobile agents (MA; 100) at or near the edges of a data communication network (130) for mobility management and data transmission among user equipments (UE; 305, 355) which may establish connections with different individual mobile agents (110) when said user equipments (305, 355) roam in said data network (130);
wherein
data originated from a first user equipment (305) and destined to a second user equipment (355) can be exchanged or forwarded directly via the corresponding mobile agents (310, 320) to which said first and second user equipments (305, 355) are respectively attached, without the need for a central home agent (HA) equipment or a plurality of administratively and operationally isolated and independent home agents, and
all of the mobile agents (110) being administered through a home agent table (HA-table; 115) distributed among all said mobile agents (110) for providing binding (210) of the IP home address (HoA; 212) of each user equipment (305, 355) with the address (214) of the mobile agent (110) to which said user equipment is attached, and wherein said home agent table (115) is a database comprising a plurality of lists of data (120) such that each mobile agent (110) is assigned a portion of the home agent table (115).

23. The method according to claim 22
**characterized in that**
said plurality of mobile agents (110) are inter-coupled or inter-connected with one another by electrical, optical, wireless or electromagnetic links or any appropriate means which provide sufficiently high quality of communications.

24. The method according to claim 22
**characterized in that**
said user equipments (305, 355) engaging mobile agents (110) in their proximity for connection establishment.

25. The method according to claim 22
**characterized in that**
said exchange and forwarding of data (560) being accomplished through IP data tunnelling (340) techniques.

26. The method according to claim 22
**characterized in that**
said mobile agents (110) being disposed on a large proportion of or all possible data paths for maintaining high levels of network efficiency and optimal mobility management.

27. The method according to claim 22
**characterized in that**
said mobile agents (110) being in communication with or integrated into the corresponding ingress and egress routers of said data network (130).

28. The method according to claim 27
**characterized in that**
said network routers comprising cellular and wireless access routers of common communication standards.

29. The method according to claim 22
**characterized in that**
a portion of said mobile agents (110) being mobile proxies (MP) which are in communication with the gateways or similar equipment of external networks.

30. The method according to claim 22
**characterized in that**
said home agent table (115) could be further used, such as in the case when a standalone AAA server (420) is not available, to store user equipment profiles (220) each of which comprising an identifier (222), an assigned home address (224) and other associated data of each said user equipment, such as current network or processing load, in order to perform load balancing between a plurality of nodes, and wherein said identifier (222) includes the media access control (MAC) address or the network access identifier (NAI) of the user equipment (305, 355).

31. The method according to claim 22
**characterized in that**
said home agent table (115) having the format of a distributed hash table (DHT) for providing efficient key-based lookup functionality.

32. The method according to claim 31
**characterized in that**
said distributed hash table (DHT) is based on any suitable DHT algorithm comprising of Chord, Pastry and Kademlia systems.

33. The method according to claim 22
**characterized in that**
said IP home addresses (212; 224) remaining valid and unchanged as long as the corresponding user equipments (305, 355) are actively connected to said data network (130).

34. The method according to claim 22
**characterized in that**
an authentication and authorization process (411, 525) being initiated if a user equipment (305, 355) attempts to connect to a mobile agent (110) when said user equipment roams and connects to a new mobile agent or during the initialization of said mobile agent and / or user equipment.

35. he method according to claim 34
**characterized in that**
said authentication and authorization process (411, 525) being executed through the extensible authentication protocol (EAP) or any other suitable algorithms.

36. he method according to claims 22 and 34
**characterized in that**
upon successful authentication (412, 536, 539), said mobile agent (110) sends router advertisements to said user equipment (305, 355) which subsequently sends a request (414, 543), using dynamic host configuration protocol (DHCP/DHCPv6) or any suitable algorithm, back to said mobile agent (110) for IP address assignment (416, 545), and wherein any change in the binding information associated with any mobile agents (110) in said data network (130) is updated accordingly.

37. The method according to claim 36
**characterized in that**
upon successful authentication and prior to the reception of said DHCP request and sending the reply containing the HoA (543), the mobile agent (110) looks up the IP address of the user equipment (305, 355) in the home agent table (537) if the user equipment home address (212, 224) does not exist in the user equipment profile (220); and wherein if said home address (212, 224) is present in the user equipment profile (220), then the location of the user equipment (305, 355) in the home agent table (115) is updated (540).

38. he method according to claim 36
**characterized in that**
said IP address assignment (416, 545) being accomplished by searching said home agent table (115) for the profile (220) of said user equipment to obtain the assigned home address (224), when said user equipment (305, 355) roams in said data network (130).

39. he method according to claim 36
**characterized in that**
said IP address assignment (416, 545) being accomplished by randomly or systematically selecting an available address with no linked or attached mobile agent address from the IP pool stored in said home agent table (115), when said user equipment and / or mobile agent are activated or during system or device boot-up (411, 505).

40. he method according to claims 30, 31, 33 and 36.
**characterized in that**
each of the local data lists of the home agent table comprising a static component and a dynamic component wherein the static component comprising the binding data fields (210) and the UE profile data fields (220) for which the local MA (110) is responsible in the overlay, and said dynamic component storing all the replied binding entries received in the DHT lookups (537); and wherein the dynamic component effectively stores routing information comprising the optimum routes for transporting data packets between any two mobile nodes or mobile agents (110) in the IP network (130).

41. he method according to claim 40
**characterized in that**
a requesting MA (310) subscribes to the destined MA's (320) publication when said requesting MA sends a lookup message and the lookup process (537) has located the matching binding information (212, 214) in the static component of said destined MA (320); and wherein upon said subscription, the entry in said dynamic component of the requesting MA (310) is informed by a Binding Update whenever there is any change in the static entry of the destined MA (320).

42. he method according to claims 40 and 41
**characterized in that**
when a lookup execution traverses a MA that has the binding information of the destined MA (320) in its dynamic component, a lookup reply is generated and the lookup process (537) is terminated upon sending back the reply; and
wherein the requesting MA (310) undertakes the subscription by registering with said traversed MA; and
whenever the traversed MA receives a Binding Update in regard with the corresponding dynamic entry, said Binding Update is forwarded to the affected MAs provided that the affected MAs have registered with or subscribed to said traversed MA.
